# EUROPEAN PATENT APPLICATION

(11) **EP 1 935 786 A2**
(43) Date of publication of application: **25.06.2008**
(21) Application number: 07113563.6
(22) Date of filing: 31.07.2007
(51) Int. Cl.: B65B 23/12, B65B 35/24

(54) **Process for the extraction of individual products from a continuous array of products**

(30) Priority: 19.12.2006 IT TO20060900
(71) Applicant: CAVANNA S.p.A., I-28077 Prato Sesia Novara (IT)
(72) Inventor: Brolli, Elio, 13861 Ailoche (Biella) (IT)
(74) Representative: Marchitelli, Mauro

(57) **Abstract**

A process for extraction of individual products (12) from a continuous array (14) of products (12) that advance in contact with one another comprises the steps of:
- setting a terminal part of the array (14) of products (12) in a guide (28) inclined with respect to a horizontal plane, with the product (12) that each time is at the end of the array (14) resting on a sliding surface (26); and
- extracting one by one the products (12) that each time are at the end of the array (14) by means of a plurality of extractor elements (40) set at a distance apart from one another and mobile with respect to the sliding surface (26) in a direction of extraction (42).

Each of said products (12) has a main concave surface (16) and a main convex surface (18) opposite to one another, and the products (12) are stacked on top of one another in the continuous array (14) with the respective concave surfaces (16) facing upwards.

## Description

The present invention relates in general to automatic plants for packaging products, in particular foodstuff products, such as for example biscuits or the like.

More in particular, the invention relates to techniques for forming groups of products for making packages each containing a pre-set quantity of products.

Just to give an example, reference can be made to biscuits with a flattened shape stacked on top of or set up against one another so as to form blocks of products (usually referred to as "slugs"), which are to be enclosed in a wrapper of packaging material.

Usually, the individual products that are to be grouped together are carried to the input point of a packaging station in the form of one or more continuous arrays of products stacked on top of or set up against one another. To make the packages there is thus necessary a preliminary operation in which, starting from a continuous array of products stacked on top of or set up against one another, successive groups of products are formed, in which each group is made up of a pre-set number of products. For the formation of the groups of products starting from a continuous array of products stacked on top of or set up against one another, fundamentally two techniques are used:
- volumetric division of the continuous array; or
- numeric formation of the groups of products.

The volumetric technique basically envisages feed of an array of products stacked on top of or set up against one another along a conveying path, with the products in contact with one another, and cyclic insertion in the array, in a pre-set area of the conveying path, of a separator element (for example, shaped like the blade of a knife) so as to separate from the array successive groups of products downstream of the separator element. When the products to be packaged are bakery products, for example biscuits, with dimensions subject to ample tolerances, the volumetric technique tends to give rise to groups of products formed by a variable number of products.

To obtain groups all formed by the same number of products, generally a technique of a numeric type is adopted, which envisages making a count of the individual products that make up each group. The most common technique envisages feeding the continuous array of products into a guide that terminates on a sliding surface. The products that each time are at the end of the array and resting on the sliding surface are removed individually by means of extractor elements set at a distance apart from one another and mobile with respect to the sliding surface in a direction of extraction of the products, generally orthogonal or substantially orthogonal to the terminal part of the continuous array of the products.

The use of this technique of extraction of the products is not at the moment possible for concave-convex products that are compenetrated into one another in the continuous array.

The object of the present invention is to provide a process for extraction of individual products having a concave-convex shape from a continuous array.

According to the present invention, this object is achieved by a process having the characteristics forming the subject of Claim 1.

The present invention arose from the observation of the fact that it is possible to extract concave-convex products from the end of a continuous array without breaking or damaging the products if they are stacked in the array with the respective concave surfaces facing upwards.

The present applicant has verified that this solution enables extraction of the concave-convex products individually from a continuous array without any problem. If, instead, the products were stacked on top of one another in the continuous array with the respective convex surfaces facing upwards, the majority of the products would get broken during the attempt to extract them from the base of the array.

Further characteristics and advantages of the present invention will emerge clearly in the course of the ensuing detailed description, which is provided purely by way of non-limiting example, with reference to the attached drawings, wherein:
- Figure 1 is a schematic perspective view of an automatic device that carries out extraction of individual products from a continuous array;
- Figure 1a is a perspective view at a larger scale of a single product;
- Figure 2 is a perspective view at a larger scale of the part indicated by the arrow II in Figure 1;
- Figure 3 is a perspective view according to the arrow III of Figure 2;
- Figure 4 is a cross section according to the line IV-IV of Figure 2; and
- Figure 5 is a cross section corresponding to Figure 4, illustrating an alternative embodiment of the process according to the present invention.

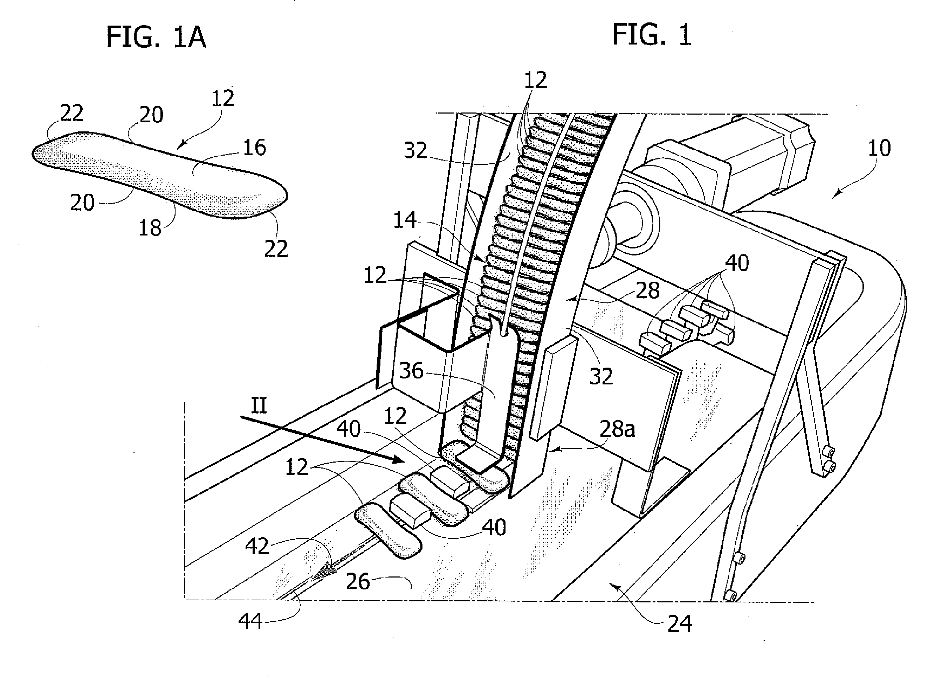

With reference to Figure 1, the number 10 indicates a device designed to carry out extraction of individual products 12 from a continuous array 14 formed by a plurality of products 12 set in contact with one another.

With reference to Figure la, the process according to the present invention has been developed specifically in view of its use with products 12 having a concave-convex shape. Typically, the products 12 are bakery products, in particular biscuits, having a generally flattened shape with two main opposite surfaces 16, 18, with a concave shape and a convex shape, respectively. Each product 12 has in plan view a generically rectangular and elongated shape, with rounded corners. In plan view, each product 12 has two major sides 20 and two minor sides 22.

With reference to Figure 1, the device 10 comprises a base structure 24 including a stationary sliding surface 26, on which the products 12 extracted from the array 14 in the way that will be described in what follows are made to advance.

The device 10 comprises a stationary guide 28, set in which is the continuous array of products 14. The guide 28 has a terminal part 28a that extends in a direction orthogonal or substantially orthogonal to the sliding surface 26. The terminal part 28a of the guide 28 is inclined with respect to a horizontal plane. Preferably, the terminal part 28a of the guide 28 extends in a vertical or substantially vertical direction. The guide 28 terminates on the sliding surface 26, so that the product 12 that each time is at the end of the continuous array 14 rests on the sliding surface 26.

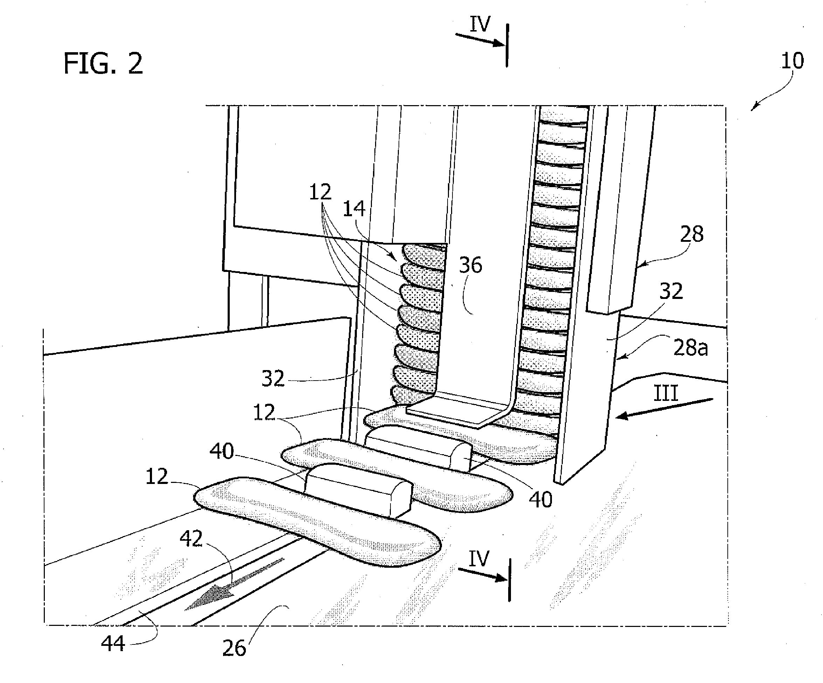

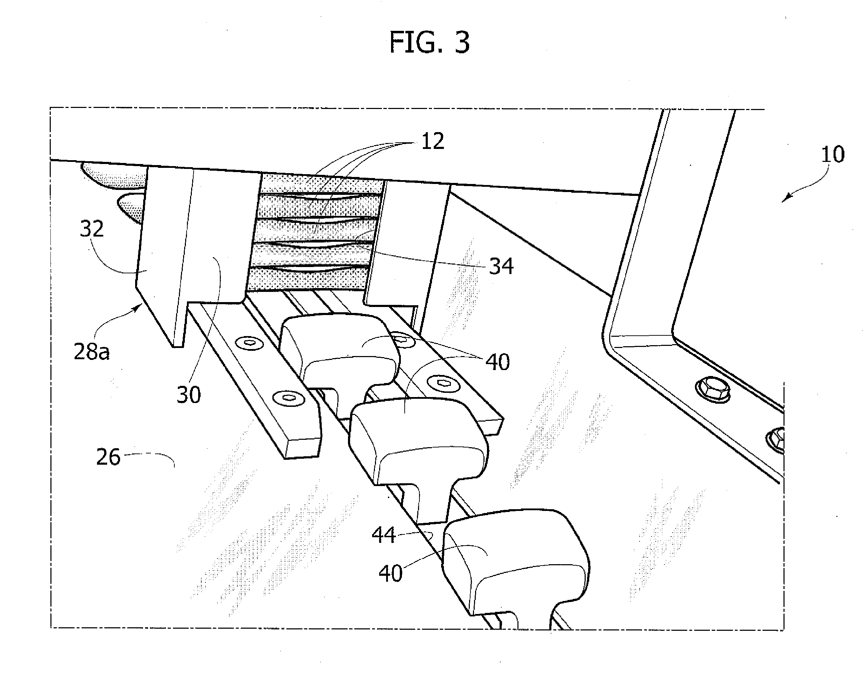

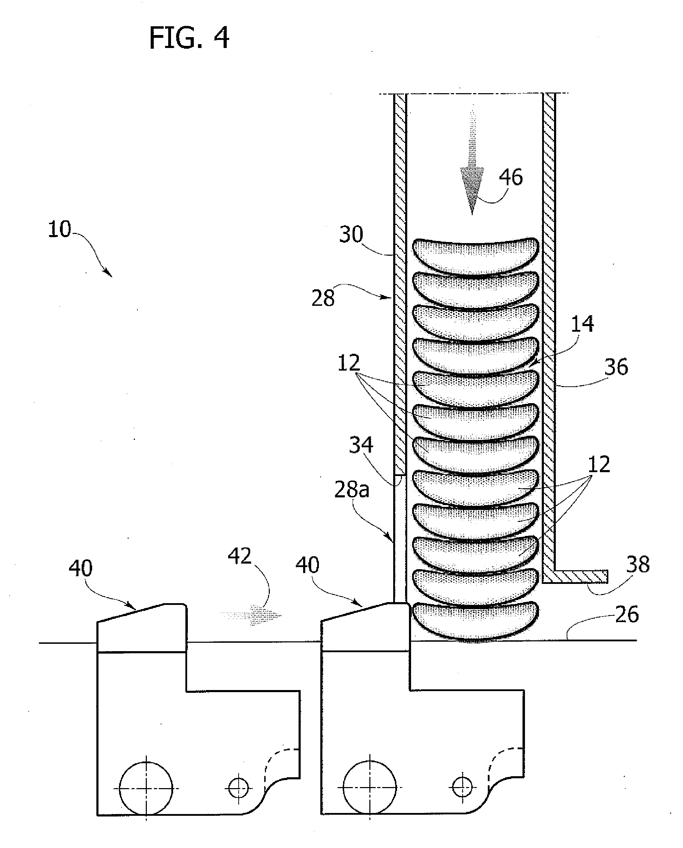

With reference to Figures 2, 3 and 4, the guide 28 comprises a rear wall 30 and two side walls 32, set parallel to one another and orthogonal to the rear wall 30, according to a general channel-like configuration. With reference to Figures 3 and 4, the rear wall 30 has an opening 34 adjacent to the sliding surface 26.

With reference to Figures 1, 2 and 3, the guide 28 comprises a retention element 36, set at the open front side of the guide 28. The retention element 36 has an L-shaped terminal portion having a bottom surface 38 facing the sliding surface 26. The distance between the surface 38 of the retention element 36 and the sliding surface 26 is greater than the maximum height of a product 12 but smaller than the minimum height of two products stacked on top of one another. The position of the retention element 36 with respect to the sliding surface 26 can be adjusted for adapting the device 10 to the dimensional variations of the products 12.

With reference to Figures 1 to 4, the device 10 comprises a plurality of extractor elements 40, which are mobile with respect to the sliding surface 26 in a direction of rectilinear extraction indicated by the arrow 42. The direction of advance of the extractor elements 40 is parallel to the sliding surface 26 and orthogonal to the open face of the guide 28. The extractor elements 40 have an active portion that projects on top of the sliding surface 26. The projecting portion of the extractor elements 40 has a height smaller than the distance between the bottom surface 38 of the retention element 36 and a top surface of the sliding surface 26. The extractor elements 40 extend through a rectilinear groove 44 provided in the sliding surface 26. The part of the extractor elements 40 that extends underneath the sliding surface 26 is connected to a motor-driven actuation member (not illustrated) constituted for example by a chain.

The parts of the extractor elements 40 that project on top of the sliding surface 26 are set at a distance apart from one another by an amount equal to or greater than the dimension of the products 12 in the direction of extraction 42.

According to the present invention, the products 12 are stacked on top of one another in the continuous array 14 with the respective concave surfaces 16 facing upwards. This is a characteristic that is essential to obtain extraction of the products from the end of the array 12 via the extractor elements 40, without causing breaking of the products.

Tests conducted by the present applicant have shown that, when the products 12 are stacked on top of one another with the respective concave surfaces facing upwards, extraction of the individual products from the base of the array 14 is obtained in a regular way, without jamming and without breaking of the products. Instead, when the products 12 are stacked on top of one another with the respective concave surfaces 16 facing downwards, the extraction of the products is extremely problematical and frequently gives rise to breaking of the products.

In operation, the extractor elements 40 are moved in the direction indicated by the arrow 42. Each extractor element 40 comes into contact with the product 12 that each time is at the end of the array 14 and extracts said product from the array, sliding it out from underneath the array. The products 12 that extend on top of the product that each time is resting on the surface 26 are withheld by the retention element 36. As the products 12 are extracted from the base of the array 14, the array itself advances along the guide 28 in the direction indicated by the arrow 46 in Figure 4.

In the embodiment illustrated in Figures 1 to 4, the extractor elements 40 move in a direction transverse to the longitudinal axis of the products 12. This solution is advantageous in so far as it enables a reduction in the speed at which the products are extracted from the array 14.

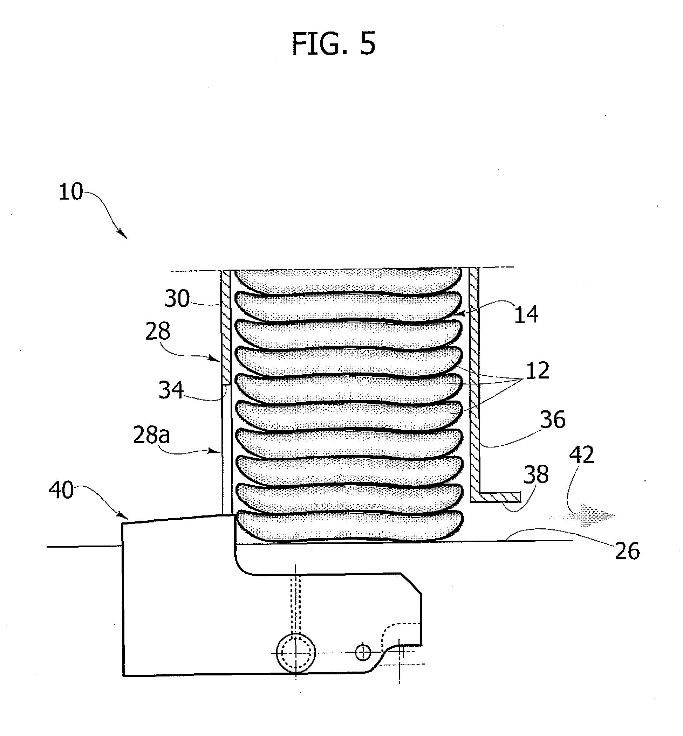

Alternatively, it is also possible to extract the products 12 with a movement in a direction parallel to the longitudinal axis of the products themselves. An example of this variant is illustrated in Figure 5, where the elements corresponding to the ones described previously are designated by the same reference numbers.

Of course, without prejudice to the principle of the invention, the details of construction and the embodiments may vary widely with respect to what is described and illustrated herein, without thereby departing from the scope of the invention, as defined by the ensuing claims.

## Claims

1. A process for the extraction of individual products (12) from a continuous array (14) of products (12) that advance in contact with one another, said process comprising the steps of:
- setting a terminal part of said array (14) of products (12) in a guide (28) inclined with respect to a horizontal plane, with the product (12) that each time is at the end of the array (14) resting on a sliding surface (26); and
- extracting one by one the products (12) that each time are at the end of the array (14) by means of a plurality of extractor elements (40) set at a distance apart from one another and mobile with respect to the sliding surface (26) in a direction of extraction (42),
said process being **characterized in that** each of said products (12) has a main concave surface (16) and a main convex surface (18) opposite to one another, and **in that** the products (12) are stacked on top of one another in said continuous array (14), with the respective concave surfaces (16) facing upwards.

2. The process according to Claim 1, **characterized in that** the products (12) have a shape elongated in a longitudinal direction.

3. The process according to Claim 2, **characterized in that** said extractor elements (40) are mobile in a direction (42) orthogonal to the longitudinal direction of said products (12).

4. The process according to Claim 2, **characterized in that** said extractor elements (40) are mobile in a direction parallel to the longitudinal direction of said products (12).

5. The process according to Claim 1, **characterized in that** it comprises the step of providing a retention element (36) that withholds the continuous array (14) that extends on top of the product (12) that each time is at the base of the array (12).
